(19) Europäisches Patentamt

European Patent Office

Office européen des brevets

(11) EP 1 707 867 A1

(12) EUROPEAN PATENT APPLICATION

(43) Date of publication:
04.10.2006 Bulletin 2006/40

(51) Int Cl.:
*F17C 11/00* (2006.01)

(21) Application number: 06251251.2

(22) Date of filing: 09.03.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 30.03.2005 US 667282 P
02.03.2006 US 66245

(71) Applicant: Northrop Grumman Corporation
Los Angeles, CA 90067 (US)

(72) Inventor: Starkovich, John A.
Redondo Beach 90278, California (US)

(74) Representative: Maury, Richard Philip
Marks & Clerk
90 Long Acre
GB-London WC2E 9RA (GB)

(54) **Reduced boiloff cryogen storage**

(57) A long-term cryogen storage system (10) comprising a storage tank shell (12) substantially filled by a nanoporous material (22) in which a stored cryogen (24) is subject to a dramatically lower boil-off rate than when stored in its bulk state. The nanoporous material (22) provides a storage medium in which the cryogen has a higher surface energy term due to extreme surface curvature provided by the nanopores of the storage medium. As a result, the cryogen exhibits an altered thermodynamic state relative to its bulk fluid state and has a substantially reduced vapor pressure, an effectively higher vaporization enthalpy ($\Delta H_v$), and a lower boiloff rate for a given rate of heat leakage through the storage tank shell.

**FIG. 2**

EP 1 707 867 A1

**EP 1 707 867 A1**

**Description**

<u>CROSS-REFERENCE TO RELATED APPLICATION</u>

This application claims, under 35 U.S.C. §119(e), the filing priority of Provisional Application No. 60/667,282, filed March 30, 2005, and having the same title as the present invention.

<u>BACKGROUND OF THE INVENTION</u>

This invention relates generally to volatile liquid storage systems and, more particularly, to techniques for storing cryogens, both in space and in terrestrial environments. Liquid cryogens are not practically storable in space for extended periods using present technology. Without active cooling, liquid oxygen (LOX) and liquid hydrogen ($LH_2$) boiloff rates have been estimated to be of the order of 0.5 to 4%/month for 1AU orbits (orbits at one Astronomical Unit, which is the distance of the earth from the sun), and somewhat less for distances further from the sun. Storage system heat leaks and low vaporization enthalpies (heat of vaporization) for these cryogens, relative to fluids like water, principally determine the loss rate.

Prior to the present invention, efforts seeking to improve hydrogen storability have focused on increasing its volumetric and gravimetric storage efficiency through use of physical adsorption on materials with high specific surface areas, high pressure tanks, chemical absorption in the form of hydrides/compounds with higher hydrogen content, heat flux reduction via oriented cross-section and use of sunshields, and active cryocoolers. These conventional approaches necessarily add system weight, cost and complexity.

The availability of light weight, long term cryogen storage systems would enable the use of non-nuclear propulsion systems for civil space exploration, planetary ascent and descent propulsion capability and hydrogen generation and storage for planetary bases. There is a similar need for long term cryogen storage technology for defense space missions, to provide more efficient and cost effective satellite orbital transfer operations. The present invention satisfies these needs without significantly adding to the weight and complexity of a cryogen storage system.

<u>SUMMARY OF THE INVENTION</u>

The present invention resides in a long-term storage system that substantially reduces the vapor pressure of a stored cryogen and simultaneously provides lower heat leakage rates into the stored cryogen. Therefore, the stored cryogen experiences significantly lower boiloff rates than would be experienced by the same cryogen conventionally stored. Briefly, the storage system of the invention comprises a storage tank shell comprising a protective outer layer, an impermeable inner layer and at least one intermediate insulation layer between the outer and inner layers; and a nanoporous foam structure filling the storage tank within the inner layer of the storage tank shell. The nanoporous foam structure provides a storage medium for a cryogen, which exhibits a substantially reduced vapor pressure than when in its bulk state, resulting in a lower boiloff rate for a given rate of heat leakage through the storage tank shell. If the storage system is not actively cooled, it still greatly extends cryogen storage life. If active cryo-cooling is employed, the system reduces the cooling power required to maintain the stored cryogen at a desired temperature.

It will be appreciated from this brief summary that the present invention represents a significant advance in the field of cryogen storage. Specifically, the invention provides a storage system in which cryogen boiloff rates are dramatically reduced, extending storage life or reducing the cooling power needed to maintain a given temperature. Other aspects and advantages of the invention will become apparent from the following more detailed description, taken in conjunction with the accompanying drawings.

<u>BRIEF DESCRIPTION OF THE DRAWINGS</u>

FIG. 1 is a perspective view of a storage system in accordance with the present invention.
FIG. 2 is a cross sectional view of the storage system of FIG. 1.
FIG. 3 is a cross sectional view of a prior art storage system.
FIG. 4 is a set of graphs showing cryogen vapor pressure reductions obtainable by use a storage system using nanoporous media.
FIG. 5 is a graph of experimental results for a change in heat of vaporization of isooctane.
FIG. 6 is a set of molecular diagrams of isooctane.
FIG. 7 is a set of graphs showing example thermograms of isooctane.
FIG. 8 is a table showing a summary of example results for isooctane.

DETAILED DESCRIPTION OF THE INVENTION

As shown in the drawings for purposes of illustration, the present invention is concerned with storage systems for cryogens. Stored cryogens are subject to boiloff over a period of time, depending on the environment in which the stored cryogens are located. The rate of boiloff is increased by the low vaporization enthalpies and high vapor pressures of typical cryogens and by heat leakage into the storage system.

In accordance with the present invention, emerging nanotechnology is applied to address and improve upon both of the above limiting factors. Materials may now be engineered with dimensional features and phonon scattering on a nanometer length scale, potentially enabling practical super-insulation materials with much lower thermal conductivities, possibly by as much as an order-of-magnitude or more. Similarly, ultralight weight nanoporous foams, nanocapillary tubular.and platelet shaped particles and aerogels may be used for storing cryogens. With a higher surface energy term due to extreme surface curvature, a "nano-containered" cryogen has an altered thermodynamic state from its bulk fluid state and has a substantially reduced vapor pressure or an effectively higher vaporization enthalpy ($\Delta H_v$), thus exhibiting a lower boiloff rate for a given heat leakage rate. The surface curvature effect on the vapor pressure of liquids in capillary pores is well understood and is described by the Kelvin equation[1]:

$$RT \ln(P_r/P_o) \quad = \quad -(2\gamma M/\rho r) \cos(\theta)$$

where $P_r/P_o$ is the ratio of the capillary liquid vapor pressure to that of the bulk liquid vapor pressure; R and T are the universal gas constant and system temperature, respectively; y, M and p are the liquid's surface tension, molecular weight and density, respectively, while r and θ are the pore radius and liquid contact angle with the pore wall.

[1] D.J. Shaw, Introduction to Coolid and Surface Chemistry, 3rd edition, Butterworths Publishers Inc., Boston, 1980, p116.

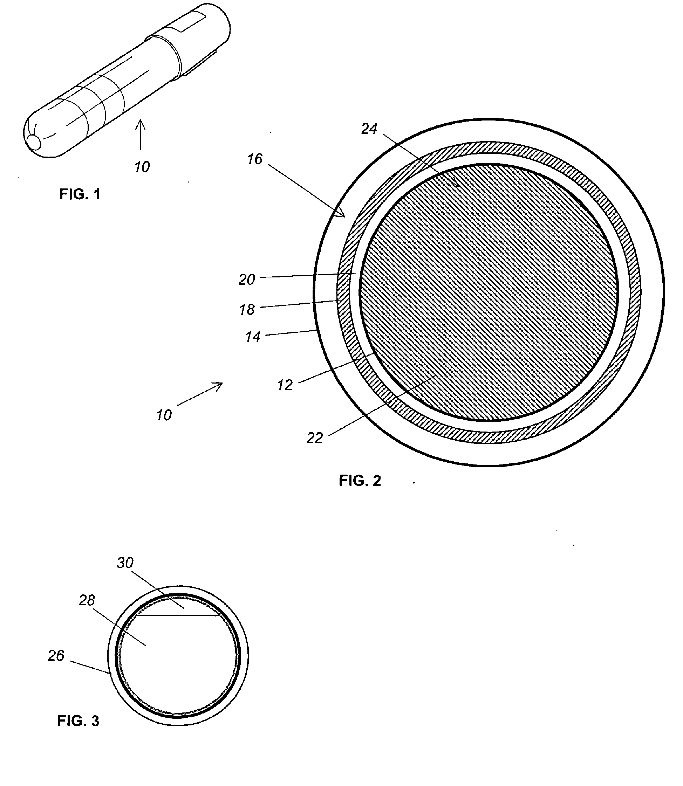

As shown in FIGS. 1 and 2, a storage system in accordance with the present invention includes a container 10, the inner walls 12 of which are formed from a nonporous material that provides extremely high heat insulating properties. For example, the outer shell 14 of container 10 may be made of an aluminum alloy or some other light weight metal, or alternatively from a glass- or graphite-fiber reinforced polymer composite material. The container shell structure may consist of one or more intermediate layers 16 comprising a closed cell foam liner 18 surrounded by multiple layers of heat reflecting polymer films 20. In a preferred embodiment, the innermost wall 12, which is directly exposed to the stored cryogenic fluid, may be a thin impermeable metal or polymer liner material. The dimensions of the container may vary greatly depending on the volume needed to be stored, and can range from less than 0.3 m to over 12 m for the outer diameter and vary from 1 m to 30 m in length. The interior dimensions and hence the fluid storage volume will depend on the particular selected materials and their thermal and mechanical properties, along with the heat flux and storage period needed. The container 10 encloses a nanoporous structure 22 that fills the container completely. The cryogen 24 is basically stored within the pores of the structure 22. The preparation of several new tubular or porous materials has been recently demonstrated that have nanometer-scale pores or cell sizes that would be useful for reducing the vapor pressure and boiloff of cryogenic liquids stored within them. These materials can include but are not limited to: carbon, silicon, boron nitride, silica, titania, alumina, and zinc oxide, and organic materials such as polystyrene, polytetrafluoroethylene, polymethylmethacrylate, polysiloxane and polyetheretherketone. In addition to tubular and platelet shaped porous particles, aerogels with their random, nanometer-scale open-cell structure and made of some of the same organic and inorganic composition materials identified above may also be suitable for cryogenic liquid storage media.

FIG. 3 contrasts the storage tank 10 with a conventional liquid cryogen storage tank 26, in which the cryogen 28 is stored in the open volume within the tank. An expansion space 30 is provided and, in some designs, containment screens or baffles (not shown) are disposed in the tank 26.

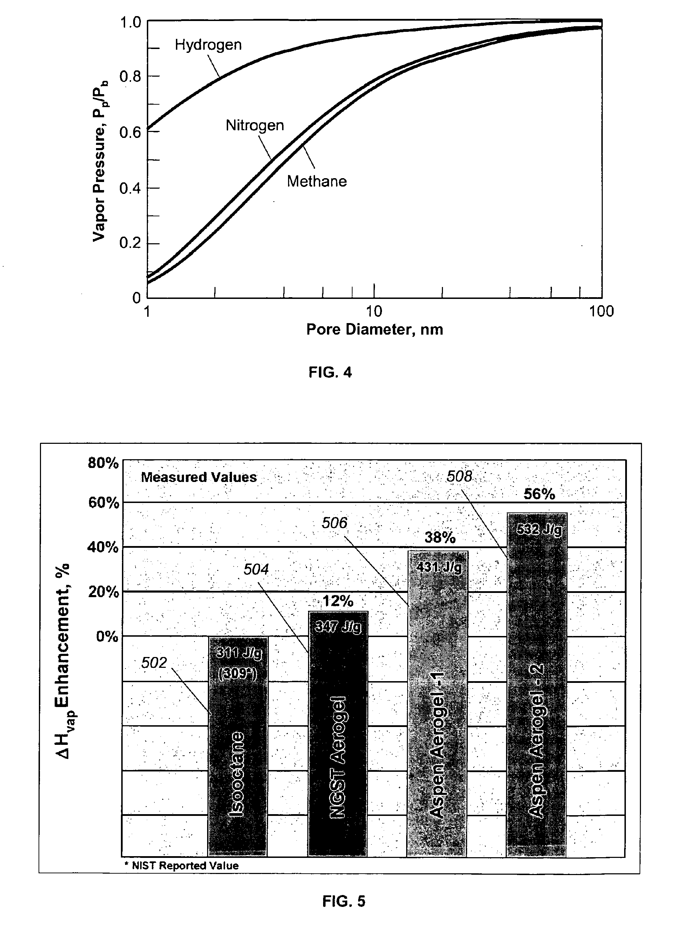

FIG. 4 shows the variation of relative vapor pressure of liquid hydrogen, nitrogen and methane, respectively, with the pore diameter of the material used to fabricate the nanoporous structure 22. It will be observed that as the pore diameter is reduced from 100 nm to 1 or 2 nm, the vapor pressure of liquid nitrogen and liquid methane falls by about an order of magnitude, and the vapor pressure of liquid hydrogen also falls significantly.

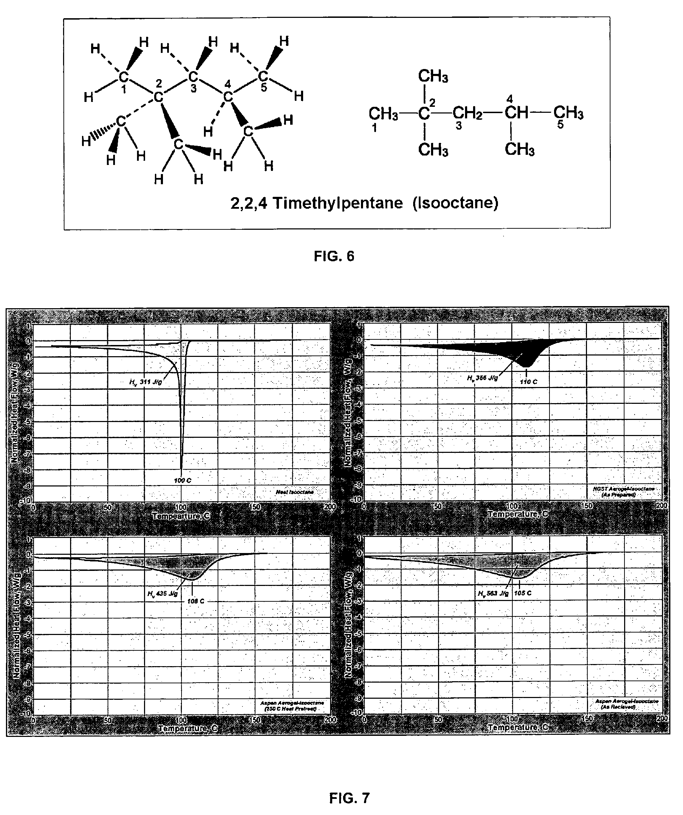

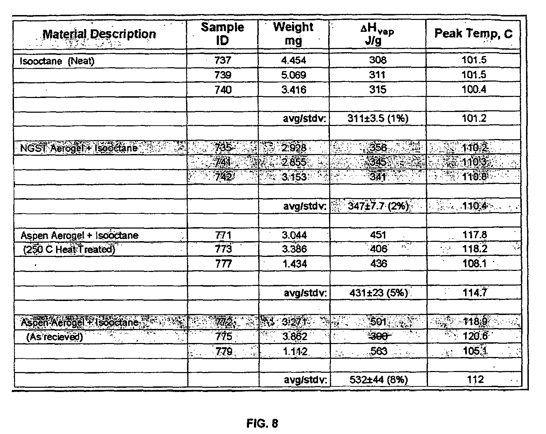

FIGS. 5, 7, and 8 show results of one embodiment of the invention when used with various aerogels for storage of isooctane (FIG. 6). Column 502 represents isooctane in a prior art container 26. The heat of vaporization was measured at 311 Joules per gram, which is consistent with reported results from the National Institute of Standard Technology's (NIST). Columns 504, 506, and 508 represent the measured heat of vaporization in several embodiments of the container 10. Column 504 represents the container 10 with an organic polymer aerogel created by Northrop Grumman Space Technology. Column 506 represents the container 10 with an inorganic polymer aerogel created by Aspen Aerogel, Inc. and heat treated at 250 degrees Celsius. Column 508 represents the container 10 with the inorganic polymer aerogel of column 506 without the heat treatment. Columns 504, 506, and 508 show that the aerogels of the container 10 increased the heat of vaporization by 12%, 38%, and 56%, respectively. The results were obtained with a micro-calorimetric technique where a weighed amount of fluid was placed in a small sealed aluminum pan with a pinhole leak and was used in conjunction with a Differential Scanning Calorimeter (DSC) instrument for measuring and recording the differential heat flow as a function of the scanned temperature. The differential heat flow was integrated over the temperature scan to determine the totally energy required to evaporate the weighed amount of hydrocarbon. The technique was suitable for determining the heat of vaporization of the simulant fluid both as a neat liquid as well as in the presence of nanoporous aerogel material.

It will be appreciated from the foregoing that the present invention would permit the practical long term storage of cryogenic fluids for space exploration and science missions and would support the safe storage of hydrogen for future terrestrial transportation and energy systems. When coupled with a cryocooler, nanopore foam storage media would reduce the electrical cooling power required to maintain a desired temperature and to counter heat leaks. Furthermore, the need for extra or separate radiation shielding would be reduced or eliminated. The foam structure used in the storage system of the invention would effectively replace fluid containment screens often used in some storage tank vessels, and would facilitate fluid transfer in zero-gravity environments.

It will also be appreciated that, although a specific embodiment of the invention has been illustrated and described, various modifications may be made without departing from the scope of the invention. Therefore, the invention should not be limited except as by the accompanying claims.

**Claims**

1. A long-term cryogen storage system, comprising:

   a storage tank shell comprising a protective outer layer, an impermeable inner layer and at least one intermediate insulation layer between the outer and inner layers; and
   a nanoporous material filling the storage tank shell within the inner layer of the storage tank shell, wherein the nanoporous material provides a storage medium for a cryogen.

2. A long-term cryogen storage system as defined in claim 1, wherein the nanoporous material is an inorganic material.

3. A long-term cryogen storage system as defined in claim 2, wherein the nanoporous material is of a substance selected from the group consisting of carbon, silicon, boron nitride, silica, titania, alumina, and zinc oxide.

4. A long-term cryogen storage system as defined in claim 1, wherein the nanoporous material is an organic or polymer material.

5. A long-term cryogen storage system as defined in claim 4, wherein the nanoporous material is of a material selected from the group consisting of polystyrene, polytetrafluoroethylene, polymethylmethacrylate, polysiloxane and polyetheretherketone.

6. A long-term cryogen storage system as defined in claim 1, wherein the nanoporous material is an aerogel with a nanometer-scale open-cell structure.

7. A long-term cryogen storage system as defined in claim 6, wherein the nanoporous material is an inorganic material.

8. A long-term cryogen storage system as defined in claim 7, wherein the nanoporous material is of a material selected from the group consisting of carbon, silicon, boron nitride, silica, titania, alumina, magnesia, and zinc oxide.

9. A long-term cryogen storage system as defined in claim 6, wherein the nanoporous material is of an organic or polymer material.

10. A long-term cryogen storage system as defined in claim 9, wherein the nanoporous material is of a substance selected from the group consisting of polystyrene, polytetrafluoroethylene, polymethylmethacrylate, polysiloxane and polyetheretherketone.

11. A long-term cryogen storage system as defined in claim 1, wherein the storage tank shell outer protective layer is of a material selected from the group consisting of aluminum, an alloy of aluminum, a glass-reinforced polymer composite material, and a graphite-fiber reinforced polymer composite material.

**12.** A long-term cryogen storage system as defined in claim 1, wherein the storage tank shell intermediate layer comprises a closed cell foam structure surrounded by multiple layers of heat reflecting polymer films.

**13.** A long-term cryogen storage system as defined in claim 1, wherein the storage tank shell impermeable inner layer is of an impermeable metal or polymer material.

**14.** A long-term cryogen storage system as defined in claim 1, further comprising:

a cryocooler coupled with the storage tank shell.

**15.** A long-term cryogen storage system as defined in claim 1, wherein the nanoporous material causes the cryogen exhibits a substantially reduced vapor pressure and/or increased heat of vaporization than in its bulk state, resulting in a lower boiloff rate for a given rate of heat leakage through the storage tank shell;
whereby the storage system extends cryogen storage life or, if active cryo-cooling is employed, reduces the cooling power required to maintain the stored cryogen at a desired temperature.

**16.** A long-term cryogen storage system as defined in claim 1, wherein the nanoporous material comprises a foam structure.

**FIG. 1**

**FIG. 2**

**FIG. 3**

FIG. 4

FIG. 5

2,2,4 Timethylpentane (Isooctane)

FIG. 6

FIG. 7

| Material Description | Sample ID | Weight mg | ΔH$_{vap}$ J/g | Peak Temp, C |
|---|---|---|---|---|
| Isooctane (Neat) | 737 | 4.454 | 308 | 101.5 |
| | 739 | 5.069 | 311 | 101.5 |
| | 740 | 3.416 | 315 | 100.4 |
| | | | | |
| | | avg/stdv: | 311±3.5 (1%) | 101.2 |
| | | | | |
| NGST Aerogel + Isooctane | 735 | 2.928 | 356 | 110.2 |
| | 741 | 2.855 | 345 | 110.3 |
| | 742 | 3.153 | 341 | 110.8 |
| | | | | |
| | | avg/stdv: | 347±7.7 (2%) | 110.4 |
| | | | | |
| Aspen Aerogel + isooctane | 771 | 3.044 | 451 | 117.8 |
| (250 C Heat Treated) | 773 | 3.386 | 406 | 118.2 |
| | 777 | 1.434 | 436 | 108.1 |
| | | | | |
| | | avg/stdv: | 431±23 (5%) | 114.7 |
| | | | | |
| Aspen Aerogel + Isooctane | 772 | 3.271 | 501 | 118.9 |
| (As recieved) | 775 | 3.862 | 390 | 120.6 |
| | 779 | 1.112 | 563 | 105.1 |
| | | | | |
| | | avg/stdv: | 532±44 (8%) | 112 |

FIG. 8

9

European Patent Office

**EUROPEAN SEARCH REPORT**

Application Number

EP 06 25 1251

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 20 2004 017036 U1 (FUTURE CAMP GMBH) 13 January 2005 (2005-01-13) * abstract; figures * * paragraph [0065] * * paragraph [0074] * * paragraph [0076] * ----- | 1 | INV. F17C11/00 |
| X | US 6 672 077 B1 (BRADLEY KEITH ET AL) 6 January 2004 (2004-01-06) * abstract; figures * * column 9, line 4 - line 46 * ----- | 1 | |
| A | US 2003/167778 A1 (BRADLEY KEITH ET AL) 11 September 2003 (2003-09-11) * abstract; figures * * page 3, paragraphs 43,77-81 * ----- | 1 | |
| A | US 2003/226365 A1 (BRADLEY KEITH ET AL) 11 December 2003 (2003-12-11) * abstract; figures 3a,3b * * page 3, paragraphs 35,36 * ----- | 1 | TECHNICAL FIELDS SEARCHED (IPC) |
| A | US 2005/000970 A1 (KIMBARA MASAHIKO ET AL) 6 January 2005 (2005-01-06) * abstract; figures * * paragraph [0096] * ----- | 1 | F17C |
| A | US 2002/117123 A1 (HUSSAIN SYED ET AL) 29 August 2002 (2002-08-29) * abstract; figures * * page 3, paragraphs 21,23,26,28 * ----- | 1 | |
| A | DE 100 07 544 A1 (LUDWIG BOELKOW STIFTUNG) 20 September 2001 (2001-09-20) * abstract; figures * * column 1, line 3 - line 8 * * page 3, line 16 - line 64 * ----- | 1 | |

The present search report has been drawn up for all claims

| Place of search | Date of completion of the search | Examiner |
|---|---|---|
| The Hague | 13 July 2006 | Lapeyrere, J |

EPO FORM 1503 03.82 (P04C01)

## ANNEX TO THE EUROPEAN SEARCH REPORT
## ON EUROPEAN PATENT APPLICATION NO.

EP 06 25 1251

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2006

| Patent document cited in search report | Publication date | Patent family member(s) | | Publication date |
|---|---|---|---|---|
| DE 202004017036 U1 | 13-01-2005 | WO | 2005044454 A2 | 19-05-2005 |
| | | DE | 102004053353 A1 | 09-06-2005 |
| US 6672077 B1 | 06-01-2004 | AU | 2002359677 A1 | 23-06-2003 |
| | | WO | 03050447 A1 | 19-06-2003 |
| | | US | 2003167778 A1 | 11-09-2003 |
| US 2003167778 A1 | 11-09-2003 | AU | 2002359677 A1 | 23-06-2003 |
| | | WO | 03050447 A1 | 19-06-2003 |
| | | US | 6672077 B1 | 06-01-2004 |
| US 2003226365 A1 | 11-12-2003 | NONE | | |
| US 2005000970 A1 | 06-01-2005 | DE | 102004014144 A1 | 25-11-2004 |
| US 2002117123 A1 | 29-08-2002 | EP | 1350015 A1 | 08-10-2003 |
| | | WO | 02061249 A1 | 08-08-2002 |
| DE 10007544 A1 | 20-09-2001 | AT | 251085 T | 15-10-2003 |
| | | AU | 3917601 A | 27-08-2001 |
| | | WO | 0160737 A1 | 23-08-2001 |
| | | DE | 10190476 D2 | 17-04-2003 |
| | | EP | 1255691 A1 | 13-11-2002 |

**EP 1 707 867 A1**

**REFERENCES CITED IN THE DESCRIPTION**

**Patent documents cited in the description**

- US 60667282 B